# EUROPEAN PATENT SPECIFICATION

(11) **EP 3 257 304 B1**
(45) Date of publication and mention of the grant of the patent: **07.04.2021**
(21) Application number: 15881495.4
(22) Date of filing: 11.02.2015
(51) Int. Cl.: G01S 1/74, G01S 1/80, G01S 5/30, G01S 5/26

(54) **MOBILE DEVICE POSITIONING**
POSITIONIERUNG MOBILER VORRICHTUNGEN
POSITIONNEMENT DE DISPOSITIFS MOBILES

(43) Date of publication of application: 20.12.2017
(73) Proprietor: Harman International Industries, Incorporated, Stamford, Connecticut 06901 (US)
(72) Inventor: YANG, Zeng, Shanghai 200233 (CN); CHEN, Zongcheng, Shanghai 200233 (CN); ZHANG, Qingshan, Shanghai 200233 (CN)
(74) Representative: Grünecker Patent- und Rechtsanwälte PartG mbB
(86) International application number: PCT/CN2015/072739
(87) International publication number: WO 2016/127333

(56) References cited:
- EP-A2- 1 460 794
- WO-A1-2015/000328
- WO-A2-2013/061268
- CN-A- 103 249 140
- CN-A- 104 101 863
- CN-A- 104 101 863
- CN-U- 203 178 481
- JP-B2- 2 845 045
- US-A1- 2011 163 917
- US-A1- 2014 192 622

## Description

### TECHNICAL FIELD

The present disclosure generally relates to mobile device positioning.

### BACKGROUND

Usually, a conventional indoor positioning system includes a plurality of speakers each of which is driven by a separate amplifier module, such that the plurality of speakers are able to receive different signals. Therefore, it is relatively easy to control the plurality of speakers to reproduce ranging sound signals at particular time intervals to implement indoor positioning.

For example, WO 2013/061268 A2 discloses an indoor positioning system using a plurality of speakers. The speakers transmit a ranging sound signal upon receiving a synchronization signal from a synchronization source. The synchronization signal is sent via the power cable, or embedded in a WiFi signal.

However, in many speaker systems, such as broadcasting systems in train stations and airports etc., a plurality of speakers are connected in series and driven by a single amplifier module, which means the plurality of speakers receive the same signal. Controlling the plurality of speakers to reproduce ranging sound signals at particular time intervals is a problem.

### SUMMARY

In accordance with the present invention, a method and system, as set forth in the independent claims, are provided. Embodiments of the invention are claimed in the dependent claims.

### BRIEF DESCRIPTION OF THE DRAWINGS

The foregoing and other features of the present disclosure will become more fully apparent from the following description and appended claims, taken in conjunction with the accompanying drawings. Understanding that these drawings depict only several embodiments in accordance with the disclosure and are, therefore, not to be considered limiting of its scope, the disclosure will be described with additional specificity and detail through use of the accompanying drawings.
FIG. 1 schematically illustrates a speaker system for positioning a mobile device within an area;
FIG. 2 schematically illustrates a flow chart for generating a plurality of ranging sound signals for positioning a mobile device; and
FIG. 3 schematically illustrates a ranging signal generating device for generating a ranging sound signal at a preset time point.

### DETAILED DESCRIPTION

In the following detailed description, reference is made to the accompanying drawings. In the drawings, similar symbols typically identify similar components, unless context dictates otherwise.

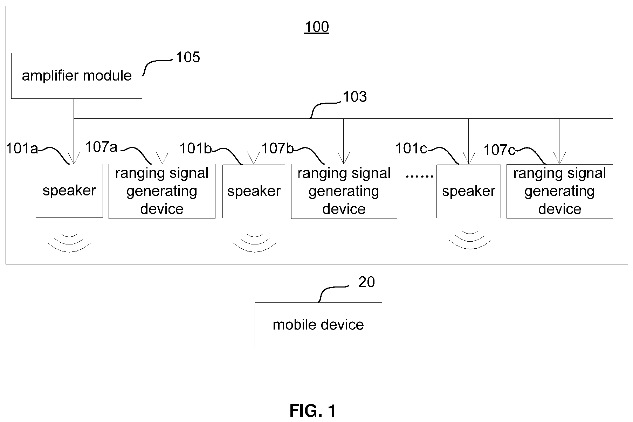

FIG. 1 schematically illustrates a speaker system 100 for positioning a mobile device 20 in an area.

The speaker system 100 includes a plurality of speakers 101a, 101b and 101c, which are connected in series and located on different points along an audio signal cable 103. The plurality of speakers 101a, 101b and 101c are driven by a single amplifier module 105 to reproduce a content audio signal transmitted on the audio signal cable 103. It should be noted that numbers and arrangement of the speakers and the ranging signal generating devices in FIG. 1 are just for illustration. In some embodiments, the number of the speakers and the ranging signal generating devices are both not less than three.

The content audio signal may be signals broadcasted periodically in the train stations or airports. As the content audio signal is transmitted on the audio signal cable 103 really fast, it can be assumed that the plurality of speakers 101a, 101b and 101c receive the content audio signal substantially at a same time point.

The speaker system 100 further includes a plurality of ranging signal generating devices 107a, 107b and 107c which are connected to the audio signal cable 103 and are located at different positions in the area. The plurality of ranging signal generating devices 107a, 107b and 107c are configured to generate a plurality of ranging sound signals. The speakers 101a, 101b and 101c may be configured to broadcast the ranging sound signals respectively, such that the mobile device 20 can receive the plurality of ranging sound signals and make records of them. Based on the records of the ranging sound signals, position relation between the mobile device 20 and each of the speakers 101a, 101b and 101c, location of the mobile device 20 can be obtained.

For positioning the mobile device 20, more specifically, for identifying the arrival of the ranging sound signals in the records, respectively, in some embodiments, the plurality of ranging sound signals may be distinct from each other. Or else, in some embodiments, the plurality of ranging sound signals may be broadcasted at different time points.

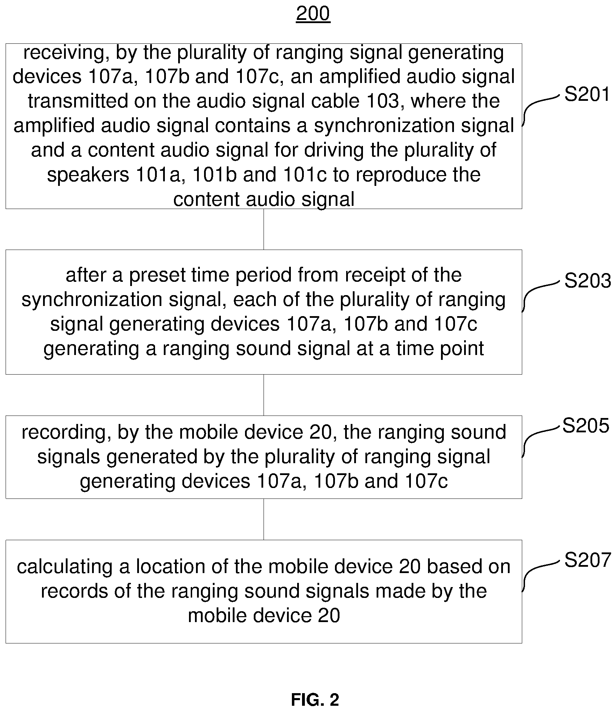

FIG. 2 schematically illustrates a flow chart 200 for generating a plurality of ranging sound signals for positioning the mobile device 20.

With reference to FIG. 1 and FIG. 2, in S201, receiving, by the plurality of ranging signal generating devices 107a, 107b and 107c, an amplified audio signal transmitted on the audio signal cable 103, where the amplified audio signal contains a synchronization signal and a content audio signal for driving the plurality of speakers 101a, 101b and 101c to reproduce the content audio signal.

In some embodiments, the plurality of ranging signal generating devices 107a, 107b and 107c may be connected to the audio signal cable 103 at different points along the audio signal cable 103. In other words, the plurality of ranging signal generating devices 107a, 107b and 107c are connected to the audio signal cable 103 in series.

In some embodiments, the amplified audio signal may be obtained by mixing the synchronization signal with the content audio signal together. In all embodiments, a mixing device mixes the synchronization signal with the content audio signal together. In some embodiments, the mixing device may be a digital mixing device for mixing digital signals together. In some embodiments, the mixing device may be an analog mixing device for mixing analog signals together. The mixed signal may be transmitted to an amplifier module 105 for amplifying it. The plurality of ranging signal generating devices 107a, 107b and 107c may receive the amplified audio signal, containing both the synchronization signal and the content audio signal, from the amplifier module 105.

In some embodiments, the synchronization signal may be a chirp signal and have a frequency higher than a preset value F1, the content audio signal may have a frequency lower than the preset value F1. Therefore, the content audio signal would not be interfered with the synchronization signal. In some embodiments, the preset value F1 may be 19KHz. In some embodiments, the chirp signal may be an up-chirp signal, a down-chirp signal, or a combination thereof.

According to the invention, the flow chart 200 further includes: separating the synchronization signal and the content audio signal from each other, where the synchronization signal is transmitted to the plurality of ranging signal generating devices 107a, 107b and 107c, the content audio signal is transmitted to the plurality of speakers 101a, 101b and 101c for driving the plurality of speakers 101a, 101b and 101c to reproduce the content audio signal.

In some embodiments, a separating unit may be employed to separate the synchronization signal from the content audio signal. In some embodiments, the separating unit may include a high-pass filter and low-pass filter. The high-pass filter is able to filter out the content audio signal which has a frequency lower than the preset value F1 and pass the synchronization signal which has a frequency higher than the preset value F1. Similarly, the low-pass filter is able to filter out the synchronization signal which has a frequency higher than the preset value F1 and pass the content audio signal which has a frequency lower than the preset value F1. Thereafter, the synchronization signal is transmitted to the plurality of ranging signal generating devices 107a, 107b and 107c, while the content audio signal is transmitted to the plurality of speakers 101a, 101b and 101c.

In S203, after a preset time period from receipt of the synchronization signal, each of the plurality of ranging signal generating devices 107a, 107b and 107c generating a ranging sound signal at a time point.

In some embodiments, the preset time period for each of the plurality of ranging signal generating devices 107a, 107b and 107c is configured to be the same. That is, each of the plurality of ranging signal generating devices 107a, 107b and 107c may generate the ranging sound signal at a same time point. In this case, the ranging sound signals generated by the plurality of ranging signal generating devices 107a, 107b and 107c should be distinct from each other so that they can be distinguished in the records.

In some embodiments, the preset time period for each of the plurality of ranging signal generating devices 107a, 107b and 107c is configured to be different from others, such that the plurality of ranging signal generating devices 107a, 107b and 107c are configured to generate the ranging sound signals at different time points. It could be understood that, as long as the intervals between the time points when the ranging sound signals are generated are long enough, the ranging sound signals are able to be identified in the records.

In some embodiments, the receipt of the synchronization signal may be detected by a detecting unit, where the detecting unit is adapted to obtain a receipt time point of the synchronization signal being received by the plurality of ranging signal generating devices107a, 107b and 107c. Each of the plurality of ranging signal generating devices may generate the ranging sound signal after the preset time period from the receipt time point. In some embodiments, the detecting unit may be a correlator which is adapted to obtain the receipt time point through cross-correlation.

It should be noted that, the ranging sound signals generated by the plurality of ranging signal generating devices 107a, 107b and 107c are electric signals, such as digital signals or analog signals. Thus, the ranging sound signals needs to be converted into acoustic signals before being broadcasted to the mobile device 20.

In some embodiments, the plurality of ranging signal generating devices 107a, 107b and 107c may be respectively connected to the plurality of speakers 101a, 101b and 101c. Thus, ranging sound signals generated by the plurality of ranging signal generating devices 107a, 107b and 107c are able to be respectively transmitted to the plurality of speakers 101a, 101b and 101c and be converted into an acoustic signal by the corresponding speaker. For example, the ranging signal generating device 107a is connected to the speaker 101a, the ranging signal generating device 107b is connected to the speaker 101b, and the ranging signal generating device 107c is connected to the speaker 101c. Thus, ranging sound signal generated by the ranging signal generating device 107a is able to be converted into an acoustic signal by the speaker 101a, ranging sound signal generated by the ranging signal generating device 107b is able to be converted into an acoustic signal by the speaker 101b, and ranging sound signal generated by the ranging signal generating device 107c is able to be converted into an acoustic signal by the speaker 101c.

In some embodiments, each of the plurality of ranging signal generating devices 107a, 107b and 107c may include a converting unit, such as an acoustic transducer, for converting the ranging sound signal into an acoustic signal, such that the ranging sound signals generated by the plurality ranging signal generating devices 107a, 107b and 107c are respectively reproduced by corresponding converting units. In this situation, the ranging sound signals don't need to be reproduced by the speakers.

In some embodiments, before the ranging sound signal is transmitted to one of the plurality of speakers or the acoustic transducers contained in the ranging signal generating devices 107a, 107b and 107c, the ranging sound signal produced by the ranging signal generating devices need to be amplified. Further, if the ranging sound signal is digital, it need further to be converted from a digital signal to an analog signal before amplified.

In S205, recording, by the mobile device 20, the ranging sound signals generated by the plurality of ranging signal generating devices 107a, 107b and 107c.

In some embodiments, recording the ranging sound signals may include: recording an arrival time of each ranging sound signal, recording an arrival time difference between each two ranging sound signals, or recording an attenuation of each ranging sound signal. Accordingly, distances between the mobile device 20 and each of the plurality of ranging signal generating devices 107 can be obtained.

In S207, calculating a location of the mobile device 20 based on the records of the ranging sound signals made by the mobile device 20.

The location of the mobile device 20 can be obtained by existing ways, such as Time of Arrival (TOA) Geolocation, Time Difference of Arrival (TDOA) Geolocation, and so on.

It should be noted that, when converting units are configured to convert the electric signals into the acoustic signals, the location of the mobile device 20 is obtained based on the records of the ranging sound signals and positions of the converting units because it is the converting units broadcasting the ranging sound signals. When the plurality of speakers 101a, 101b, and 101c are configured to convert the electric signals into the acoustic signals, the location of the mobile device 20 is obtained based on the records of the ranging sound signals and positions of the plurality of speakers 101a, 101b and 101c.

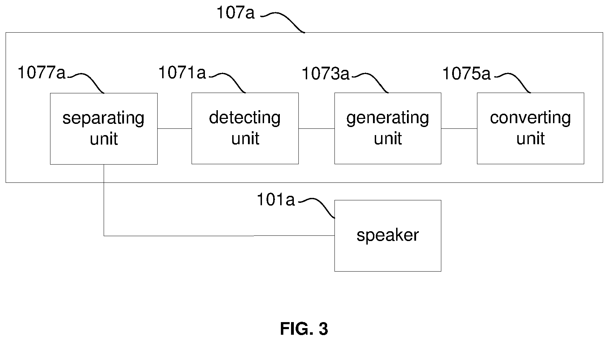

FIG. 3 schematically illustrates a diagram of the ranging signal generating device 107a. The ranging signal generating device 107a may include: a detecting unit 1071a, and a generating unit 1073a.

The detecting unit 1071a may be connected to the audio signal cable 103 for detecting if the amplified audio signal transmitted on the audio signal cable 103 contains a synchronization signal. The detecting unit 1071a may be further configured to detect a receipt time point of the synchronization signal being received by the ranging signal generating device 107a.

In some embodiments, the detecting unit 1071a may be a correlator for detecting the synchronization signal through cross-relation.

It should be noted that, in some embodiments, the plurality of ranging signal generating devices 107a, 107b and 107c may use a common detecting unit 1071a to detect the receipt of the synchronization signal.

The generating unit 1073a is configured to generate a ranging sound signal when the synchronization signal is detected by the detecting unit 1071a, where the ranging sound signal is generated at a time point after a preset time period from the synchronization signal is detected or from the receipt time point.

In some embodiments, the ranging signal generating device 107a may further include a converting unit 1075a. The converting unit 1075a is configured to convert electric signals from the generating unit 1073a into acoustic signals.

In some embodiments, the generating unit 1073a of the ranging signal generating device 107a may be connected to the speaker 101a, such that the electric signals from the generating unit 1073a is able to be converted into the acoustic signals by the speaker 101a. It should be noted that, in some embodiments, a digital to analog converter may be employed to convert the ranging sound signal from a digital signal to an analog signal before the ranging sound signal is transmitted to the speaker 101a. In some embodiments, an amplifier may be employed to amplify the ranging sound signal before transmitted to the speaker.

In some embodiments, the detecting unit 1071a of the ranging signal generating device 107a may be connected with a separating unit 1077a and receive the amplified audio signal from the separating unit 1077a. The separating unit 1077a is configured to separate the synchronization signal from the content audio signal, where the synchronization signal is transmitted to the plurality of ranging signal generating devices 107a, 107b and 107c, the content audio signal is transmitted to the plurality of speakers 101a, 101b and 101c for driving the plurality of speakers 101a, 101b and 101c to reproduce the content audio signal. In such way, accuracy rate and efficiency of the detecting unit 1071a may be improved.

In some embodiments, the synchronization signal may be a chirp signal and have a frequency higher than a preset value F1, the content audio signal may have a frequency lower than the preset value F1. The separating unit 1077a may include a high-pass filter for filtering out the content audio signal and pass the synchronization signal to be transmitted to the detecting unit 1071a of the ranging signal generating device 107a. The separating unit 1077a may further include a low-pass filter for filtering out synchronization signal and pass the content audio signal to be transmitted to the speaker 101a.

There is little distinction left between hardware and software implementations of aspects of systems; the use of hardware or software is generally a design choice representing cost vs. efficiency tradeoffs. For example, if an implementer determines that speed and accuracy are paramount, the implementer may opt for a mainly hardware and/or firmware vehicle; if flexibility is paramount, the implementer may opt for a mainly software implementation; or, yet again alternatively, the implementer may opt for some combination of hardware, software, and/or firmware.

## Claims

1. A method for generating a plurality of ranging sound signals for positioning a mobile device, comprising:
mixing, by a mixing device, a synchronization signal with a content audio signal, where the content audio signal is for driving a plurality of speakers connected in series to an audio signal cable to reproduce the content audio signal;
transmitting the mixed signal on the audio signal cable;
separating the synchronization signal and the content audio signal from each other, where the synchronization signal is transmitted to a plurality of ranging signal generating devices connected to the audio signal cable and located at different positions in an area, and the content audio signal is transmitted to the plurality of speakers;
generating (S203), by each of the plurality of ranging signal generating devices, an electric ranging sound signal based on the synchronization signal transmitted on the audio signal cable;
converting, by the ranging signal generating devices or by respective ones of the plurality of speakers connected to the respective ranging signal generating devices, the respective electric ranging sound signals into respective acoustic signals and broadcasting the respective acoustic signals to the mobile device, such that a location of the mobile device within the area can be obtained (S207) based on records (S205) of the acoustic signals made by the mobile device.

2. The method according to claim 1, wherein the electric ranging sound signal is generated after a preset time period from receipt of the synchronization signal detected by a detecting unit, where a respective receipt time point of the synchronization signal being received by the respective ranging signal generating device is obtained by the detection unit.

3. The method according to claim 2, wherein the preset time period for each of the plurality of ranging signal generating devices is configured to be different, such that the electric ranging sound signals are generated at different time points; or
wherein the preset time period for each of the plurality of ranging signal generating devices is configured to be the same, where the electric ranging sound signals are distinct from each other.

4. The method according to claim 1, wherein the plurality of ranging signal generating devices are respectively connected to respective ones of the plurality of speakers, such that electric ranging sound signals from the plurality of ranging signal generating devices are respectively converted into acoustic signals by the respective ones of the plurality of speakers.

5. The method according to claim 1, wherein the records of the audio signals comprise at least one selected from a group consisting of an arrival time of each audio signal, an arrival time difference between each two of the audio signals, and a signal attenuation of each audio signal.

6. A system (100) for generating a plurality of ranging sound signals for positioning a mobile device (20), comprising
an audio signal cable (103);
a plurality of speakers (101a-c) which are connected in series to the audio signal cable (103);
a mixing device configured for mixing a synchronization signal with a content audio signal before the mixed signal is transmitted on the audio signal cable, where the content audio signal is for driving the plurality of speakers to reproduce the content audio signal;
a plurality of ranging signal generating devices (107a-c) which are connected to the audio signal cable (103) and are located at different positions in an area; and
a separating unit (1077a) configured for separating the synchronization signal and the content audio signal from each other, where the synchronization signal is transmitted to the plurality of ranging signal generating devices(107a-c), and the content audio signal is transmitted to the plurality of speakers (101a-c);
wherein each of the plurality of ranging signal generating devices (107a-c) is configured to: generate an electric ranging sound signal based on the synchronization signal transmitted on the audio signal cable (103); and
wherein each ranging signal generating device (107a-c) is configured for converting the respective electric ranging sound signal into a respective acoustic signal and broadcasting the respective acoustic signal to the mobile device (20), or wherein each ranging signal generating device (107a-c) is connected to a respective one of the plurality of speakers (101a-c) and the respective speaker (101a-c) is configured for converting the respective electric ranging sound signal into a respective acoustic signal and broadcasting the respective acoustic signal to the mobile device (20),
such that a location of the mobile device (20) within the area can be obtained based on records of the acoustic signals made by the mobile device (20).

7. The system according to claim 6, wherein the plurality of ranging signal generating devices are respectively connected to respective ones of the plurality of speakers (101a-c), such that the electric ranging sound signals from the plurality of ranging signal generating devices are respectively converted into acoustic signals by the respective ones of plurality of speakers.

8. The system according to claim 6, further comprising a detecting unit (1071a) adapted to detect the receipt of the synchronization signal, where the detecting unit is adapted to obtain a respective receipt time point of the synchronization signal being received by the plurality of ranging signal generating devices.

9. The system according to claim 8, wherein the electric ranging sound signal is generated after a preset time period from receipt of the synchronization signal.

10. The system according to claim 9, wherein the preset time period for each of the plurality of ranging signal generating devices is configured to be different, such that the electric ranging sound signals are generated at different time points; or
wherein the preset time period for each of the plurality of ranging signal generating devices is configured to be the same, where the electric ranging sound signals are distinct from each other.

11. The system according to claim 6, wherein the records of the audio signals comprise at least one selected from a group consisting of an arrival time of each audio signal, an arrival time difference between each two of the audio signals, and a signal attenuation of each audio signal.

## Patentansprüche

1. Verfahren zum Erzeugen einer Vielzahl von Entfernungsmessungsschallsignalen zum Positionieren einer mobilen Vorrichtung, umfassend:
Mischen, durch eine Mischvorrichtung, eines Synchronisierungssignals mit einem Inhalt-Audiosignal, wobei das Inhalt-Audiosignal zum Antreiben einer Vielzahl von Lautsprechern, die mit einem Audiosignalkabel in Reihe verbunden sind, bestimmt ist, um das Inhalt-Audiosignal zu reproduzieren;
Übertragen des gemischten Signals an das Audiosignalkabel;
Trennen des Synchronisierungssignals und des Inhalt-Audiosignals voneinander, wobei das Synchronisierungssignal an eine Vielzahl von Entfernungsmessungssignal-Erzeugungsvorrichtungen, die mit dem Audiosignalkabel verbunden sind und sich an unterschiedlichen Positionen in einem Gebiet befinden, übertragen wird, und das Inhalt-Audiosignal an die Vielzahl von Lautsprechern übertragen wird;
Erzeugen (S203), durch jede aus der Vielzahl von Entfernungsmessungssignal-Erzeugungsvorrichtungen, eines elektrischen Entfernungsmessungsschallsignals auf Grundlage des Synchronisierungssignals, das auf dem Audiosignalkabel übertragen wird;
Umwandeln, durch die Entfernungsmessungssignal-Erzeugungsvorrichtungen oder durch jeweilige einzelne aus der Vielzahl von Lautsprechern, die mit den jeweiligen Entfernungsmessungssignal-Erzeugungsvorrichtungen verbunden sind, der jeweiligen elektrischen Entfernungsmessungsschallsignale in jeweilige akustische Signale und Senden der jeweiligen akustischen Signale an die mobile Vorrichtung, sodass ein Standort der mobilen Vorrichtung innerhalb des Bereichs auf Grundlage von Aufzeichnungen (S205) der akustischen Signale, die durch die mobile Vorrichtung vorgenommen werden, erhalten (S207) werden können.

2. Verfahren nach Anspruch 1, wobei das elektrische Entfernungsmessungsschallsignal nach einem voreingestellten Zeitraum ab dem Empfang des Synchronisierungssignals, das durch eine Erkennungseinheit erkannt wird, erzeugt wird, wobei ein jeweiliger Empfangszeitpunkt des Synchronisierungssignals, der durch die jeweilige Entfernungsmessungssignal-Erzeugungsvorrichtung empfangen wird, durch die Erkennungseinheit erhalten wird.

3. Verfahren nach Anspruch 2, wobei der voreingestellte Zeitraum für jede aus der Vielzahl von Entfernungsmessungssignal-Erzeugungsvorrichtungen dazu konfiguriert ist, unterschiedlich zu sein, sodass die elektrischen Entfernungsmessungsschallsignale zu unterschiedlichen Zeitpunkten erzeugt werden; oder
wobei der voreingestellte Zeitraum für jede aus der Vielzahl von Entfernungsmessungssignal-Erzeugungsvorrichtungen dazu konfiguriert ist, gleich zu sein, wobei sich die elektrischen Entfernungsmessungsschallsignale voneinander unterscheiden.

4. Verfahren nach Anspruch 1, wobei die Vielzahl von Entfernungsmessungssignal-Erzeugungsvorrichtungen jeweils mit jeweiligen einzelnen aus der Vielzahl von Lautsprechern verbunden ist, sodass die elektrischen Entfernungsmessungsschallsignale von der Vielzahl von Entfernungsmessungssignal-Erzeugungsvorrichtungen durch die jeweiligen einzelnen aus der Vielzahl von Lautsprechern jeweils in akustische Signale umgewandelt werden.

5. Verfahren nach Anspruch 1, wobei die Aufzeichnungen der Audiosignale zumindest eines ausgewählt aus einer Gruppe bestehend aus einer Ankunftszeit jedes Audiosignals, eines Ankunftszeitunterschieds zwischen jeweils zwei der Audiosignale und einer Signaldämpfung jedes Audiosignals umfassen.

6. System (100) zum Erzeugen einer Vielzahl von Entfernungsmessungsschallsignalen zum Positionieren einer mobilen Vorrichtung(20), umfassend:
ein Audiosignalkabel (103);
eine Vielzahl von Lautsprechern (101a-c), die mit dem Audiosignalkabel (103) in Reihe verbunden sind;
eine Mischvorrichtung, die zum Mischen eines Synchronisierungssignals mit einem Inhalt-Audiosignal konfiguriert ist, bevor das gemischte Signal auf dem Audiosignalkabel übertragen wird, wobei das Inhalt-Audiosignal zum Antreiben der Vielzahl von Lautsprechern bestimmt ist, um das Inhalt-Audiosignal zu reproduzieren;
eine Vielzahl von Entfernungsmessungssignal-Erzeugungsvorrichtungen (107a-c), die mit dem Audiosignalkabel (103) verbunden sind und sich an unterschiedlichen Positionen in einem Bereich befinden; und
eine Trennungseinheit (1077a), die zum Trennen des Synchronisierungssignals und des Inhalt-Audiosignals voneinander konfiguriert ist, wobei das Synchronisierungssignal an die Vielzahl von Entfernungsmessungssignal-Erzeugungsvorrichtungen (107a-c) übertragen wird und das Inhalt-Audiosignal an die Vielzahl von Lautsprechern (101a-c) übertragen wird;
wobei jede aus der Vielzahl von Entfernungsmessungssignal-Erzeugungsvorrichtungen (107a-c) zu Folgendem konfiguriert ist:
ein elektrisches Entfernungsmessungsschallsignals auf Grundlage des Synchronisierungssignals, das auf dem Audiosignalkabel (103) übertragen wird, zu erzeugen; und
wobei jede Entfernungsmessungssignal-Erzeugungsvorrichtung (107a-c) zum Umwandeln des jeweiligen elektrischen Entfernungsmessungsschallsignals in ein jeweiliges akustisches Signal und zum Senden des jeweiligen akustischen Signals an die mobile Vorrichtung (20) konfiguriert ist, oder wobei jede Entfernungsmessungssignal-Erzeugungsvorrichtung (107a-c) mit einem jeweiligen einzelnen aus der Vielzahl von Lautsprechern (101a-c) verbunden ist und der jeweilige Lautsprecher (101a-c) zum Umwandeln des jeweiligen elektrischen Entfernungsmessungsschallsignals in ein jeweiliges akustisches Signal und zum Senden des jeweiligen akustischen Signals an die mobile Vorrichtung (20) konfiguriert ist,
sodass ein Standort der mobilen Vorrichtung (20) innerhalb des Bereichs auf Grundlage von Aufzeichnungen der akustischen Signale, die durch die mobile Vorrichtung (20) vorgenommen werden, erhalten werden kann.

7. System nach Anspruch 6, wobei die Vielzahl von Entfernungsmessungssignal-Erzeugungsvorrichtungen jeweils mit jeweiligen einzelnen aus der Vielzahl von Lautsprechern (101a-c) verbunden ist, sodass die elektrischen Entfernungsmessungsschallsignale von der Vielzahl von Entfernungsmessungssignal-Erzeugungsvorrichtungen durch die jeweiligen einzelnen aus der Vielzahl von Lautsprechern jeweils in akustische Signale umgewandelt werden.

8. System nach Anspruch 6, ferner umfassend eine Erkennungseinheit (1071a), die dazu angepasst ist, den Empfang des Synchronisierungssignals zu erkennen, wobei die Erkennungseinheit dazu angepasst ist, einen jeweiligen Empfangszeitpunkt des Synchronisierungssignals, das durch die Vielzahl von Entfernungsmessungssignal-Erzeugungsvorrichtungen empfangen wird, zu erhalten.

9. System nach Anspruch 8, wobei das elektrische Entfernungsmessungsschallsignal nach einem voreingestellten Zeitraum nach dem Empfang des Synchronisierungssignals erzeugt wird.

10. System nach Anspruch 9, wobei der voreingestellte Zeitraum für jede aus der Vielzahl von Entfernungsmessungssignal-Erzeugungsvorrichtungen dazu konfiguriert ist, unterschiedlich zu sein, sodass die elektrischen Entfernungsmessungsschallsignale zu unterschiedlichen Zeitpunkten erzeugt werden; oder
wobei der voreingestellte Zeitraum für jede aus der Vielzahl von Entfernungsmessungssignal-Erzeugungsvorrichtungen dazu konfiguriert ist, gleich zu sein, wobei sich die elektrischen Entfernungsmessungsschallsignale voneinander unterscheiden.

11. System nach Anspruch 6, wobei die Aufzeichnungen der Audiosignale zumindest eines ausgewählt aus einer Gruppe bestehend aus einer Ankunftszeit jedes Audiosignals, eines Ankunftszeitunterschieds zwischen jeweils zwei der Audiosignale und einer Signaldämpfung jedes Audiosignals umfassen.

## Revendications

1. Procédé pour générer une pluralité de signaux sonores de télémétrie pour positionner un dispositif mobile, comprenant :
le mélange, par un dispositif de mélange, d'un signal de synchronisation avec un signal audio de contenu, où le signal audio de contenu sert à commander une pluralité de haut-parleurs connectés en série à un câble de signal audio pour reproduire le signal audio de contenu ;
la transmission du signal mélangé sur le câble de signal audio ;
la séparation du signal de synchronisation et du signal audio de contenu l'un de l'autre, où le signal de synchronisation est transmis à une pluralité de dispositifs de génération de signal de télémétrie connectés au câble de signal audio et situés à différentes positions dans une zone, et le signal audio de contenu est transmis à la pluralité de haut-parleurs ;
la génération (S203), par chacun de la pluralité de dispositifs de génération de signal de télémétrie, d'un signal électrique sonore de télémétrie sur la base du signal de synchronisation transmis sur le câble de signal audio ;
la conversion, par les dispositifs de génération de signal de télémétrie ou par ceux respectifs de la pluralité de haut-parleurs connectés aux dispositifs de génération de signal de télémétrie respectifs, des signaux électriques sonores de télémétrie respectifs en signaux acoustiques respectifs et la diffusion des signaux acoustiques respectifs vers un dispositif mobile, de sorte qu'un emplacement du dispositif mobile au sein de la zone puisse être obtenu (S207) sur la base d'enregistrements (S205) des signaux acoustiques faits par le dispositif mobile.

2. Procédé selon revendication 1, dans lequel le signal électrique sonore de télémétrie est généré après une période de temps prédéfinie à partir de la réception du signal de synchronisation détecté par une unité de détection, où un point temporel de réception respectif du signal de synchronisation reçu par le dispositif de génération de signal de télémétrie respectif est obtenu par l'unité de détection.

3. Procédé selon la revendication 2, dans lequel la période de temps prédéfinie pour chacun de la pluralité de dispositifs de génération de signal de télémétrie est conçue pour être différente, de sorte que les signaux électriques sonores de télémétrie sont générés à des points temporels différents ; ou dans lequel la période de temps prédéfinie pour chacun de la pluralité de dispositifs de génération de signal de télémétrie est conçue pour être la même, où les signaux électriques sonores de télémétrie sont distincts les uns des autres.

4. Procédé selon la revendication 1, dans lequel la pluralité de dispositifs de génération de signal de télémétrie sont respectivement connectés à ceux respectifs de la pluralité de haut-parleurs, de sorte que les signaux électriques sonores de télémétrie provenant de la pluralité de dispositifs de génération de signal de télémétrie sont respectivement convertis en signaux acoustiques par ceux respectifs de la pluralité de haut-parleurs.

5. Procédé selon la revendication 1, dans lequel les enregistrements des signaux audio comprennent au moins l'un sélectionné dans un groupe constitué d'un temps d'arrivée de chaque signal audio, d'une différence de temps d'arrivée entre deux des signaux audio et d'une atténuation de signal de chaque signal audio.

6. Système (100) pour générer une pluralité de signaux sonores de télémétrie pour positionner un dispositif mobile (20), comprenant :
un câble de signal audio (103) ;
une pluralité de haut-parleurs (101a-c) qui sont connectés en série au câble de signal audio (103) ;
un dispositif de mélange conçu pour mélanger un signal de synchronisation avec un signal audio de contenu avant la transmission du signal mélangé sur le câble de signal audio, où le signal audio de contenu sert à commander la pluralité de haut-parleurs pour reproduire le signal audio de contenu ;
une pluralité de dispositifs de génération de signal de télémétrie (107a-c) qui sont connectés au câble de signal audio (103) et sont situés à différentes positions dans une zone ; et
une unité de séparation (1077a) conçue pour séparer le signal de synchronisation et le signal audio de contenu l'un de l'autre, où le signal de synchronisation est transmis à la pluralité de dispositifs de génération de signal de télémétrie (107a-c), et le signal audio de contenu est transmis à la pluralité de haut-parleurs (101a-c) ;
dans lequel chacun de la pluralité de dispositifs de génération de signal de télémétrie (107a-c) est conçu pour : générer un signal électrique sonore de télémétrie sur la base du signal de synchronisation transmis sur le câble de signal audio (103) ; et
dans lequel chaque dispositif de génération de signal de télémétrie (107a-c) est conçu pour convertir le signal électrique sonore de télémétrie respectif en un signal acoustique respectif et diffuser le signal acoustique respectif vers le dispositif mobile (20), ou dans lequel chaque dispositif de génération de signal de télémétrie (107a-c) est connecté à un respectif de la pluralité de haut-parleurs (101a-c) et le haut-parleur (101a-c) respectif est conçu pour convertir le signal électrique sonore de télémétrie respectif en un signal acoustique respectif et diffuser le signal acoustique respectif vers le dispositif mobile (20),
de sorte qu'un emplacement du dispositif mobile (20) au sein de la zone puisse être obtenu sur la base d'enregistrements des signaux acoustiques faits par le dispositif mobile (20).

7. Système selon la revendication 6, dans lequel la pluralité de dispositifs de génération de signal de télémétrie sont respectivement connectés à ceux respectifs de la pluralité de haut-parleurs (101a-c), de sorte que les signaux électriques sonores de télémétrie provenant de la pluralité de dispositifs de génération de signal de télémétrie sont respectivement convertis en signaux acoustiques par ceux respectifs de la pluralité de haut-parleurs.

8. Système selon la revendication 6, comprend en outre une unité de détection (1071a) adaptée pour détecter la réception du signal de synchronisation, où l'unité de détection est adaptée pour obtenir un point temporel de réception respectif du signal de synchronisation reçu par la pluralité de dispositifs de génération de signal de télémétrie.

9. Système selon la revendication 8, dans lequel le signal électrique sonore de télémétrie est généré après une période de temps prédéfinie à partir de la réception du signal de synchronisation.

10. Système selon la revendication 9, dans lequel la période de temps prédéfinie pour chacun de la pluralité de dispositifs de génération de signal de télémétrie est conçue pour être différente, de sorte que les signaux électriques sonores de télémétrie sont générés à des points temporels différents ; ou dans lequel la période de temps prédéfinie pour chacun de la pluralité de dispositifs de génération de signal de télémétrie est conçue pour être la même, dans lequel les signaux électriques sonores de télémétrie sont distincts les uns des autres.

11. Système selon la revendication 6, dans lequel les enregistrements des signaux audio comprennent au moins l'un sélectionné dans un groupe constitué d'un temps d'arrivée de chaque signal audio, d'une différence de temps d'arrivée entre deux des signaux audio et d'une atténuation de signal de chaque signal audio.
